# EUROPEAN PATENT APPLICATION

(11) **EP 3 640 839 A1**
(43) Date of publication of application: **22.04.2020**
(21) Application number: 19179852.9
(22) Date of filing: 13.06.2019
(51) Int. Cl.: G06K 9/00, B62D 15/02

(54) **VEHICLE PARKING ASSIST APPARATUS AND METHOD**

(30) Priority: 16.10.2018 KR 20180123347
(71) Applicant: HYUNDAI MOTOR COMPANY, Seoul 06797 (KR); Kia Motors Corporation, Seoul 06797 (KR)
(72) Inventor: YOON, Dae Joong, 18280 Gyeonggi-do (KR)
(74) Representative: Isarpatent

(57) **Abstract**

A vehicle parking assist apparatus includes: a space search device configured to search for an available parking space; a determining device configured to determine a type of parking for the available parking space; and a controller configured to determine a parking execution method in consideration of a position relationship between the available parking space and a host vehicle when determined that the type of parking for the available parking space is an angle parking type and to execute parking into the available parking space.

## Description

### CROSS-REFERENCE TO RELATED APPLICATION

This application is based on and claims the benefit of priority to Korean Patent Application No. 10-2018-0123347, filed on October 16, 2018, in the Korean Intellectual Property Office, the disclosure of which is incorporated herein in its entirety by reference.

### TECHNICAL FIELD

The present disclosure relates to a vehicle parking assist apparatus and method.

### BACKGROUND

Generally, a vehicle parking assist system recognizes information such as an available parking space for a vehicle using a sensor such as an ultrasonic sensor mounted on the vehicle or the like, and performs a parking assist control function using the recognized information. It is thus necessary to recognize the parking space to safely and accurately park a vehicle by such a parking assist system.

In this fast growing world where the number of vehicles is increasing, the number of parking spaces is becoming insufficient for the number of vehicles that have significantly increased. In particular, for the narrow roads, parking spaces with a diagonal shape have been increasing to secure parking spaces considering the driver's parking convenience. However, in the case of a diagonal parking space, an angle of entry into the parking space is not well structured, and a parking assist control function of a general parking assist system is limited to a right angle parking function or a parallel parking function. In addition, it is difficult to execute parking depending on an angle between a vehicle and an entrance of the parking space.

### SUMMARY

An object of the present disclosure is to provide a vehicle parking assist apparatus and method, which are capable of aiding in parking into a diagonal parking space.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a vehicle parking assist apparatus may include: a space search device configured to search for an available parking space; a determining device configured to determine a type of parking for the available parking space; and a controller configured to determine a parking execution method in consideration of a position relationship between the available parking space and a host vehicle when determined the type of parking for the available parking space is an angle parking type and to execute parking into the available parking space.

The space search device may include at least one of an ultrasonic sensor, a front camera, or a side-mirror camera.

The space search device may determine whether search of the available parking space is completed based on whether two consecutive parking space-separation lines are recognized without disconnection based on an image obtained from the front camera, and based on a presence or absence of an object between the two consecutive parking space-separation lines.

The space search device may determine whether search of the available parking space is completed based on whether two consecutive parking space-separation lines are recognized without disconnection in a top view image generated based on images obtained from the front camera and the side-mirror camera, and based on a presence or absence of an object between the two parking space-separation lines.

The determining device may determine the parking type based on an angle between at least one parking space-separation line and a parking space-entry line, which are identified in the available parking space.

The vehicle parking assist apparatus may further include a display configured to display a search completion message for parking guide to a user when search of the available parking space is completed.

The controller may determine forward parking as the parking execution method when search of the available parking space is completed in a state in which the host vehicle is positioned before reaching a central axis of the available parking space in a traveling direction of the host vehicle, and determine backward parking as the parking execution method when the search of the available parking space is completed in a state in which the host vehicle is positioned after passing the central axis of the available parking space.

The controller may generate a parking trajectory for parking the host vehicle into the available parking space when the forward parking is determined as the parking execution method, and the controller may generate a first forward parking trajectory when a rear axle of the host vehicle is capable of being positioned on the central axis of the available parking space, and generate a second forward parking trajectory when the rear axle of the host vehicle is not capable of being positioned on the central axis of the available parking space, in controlling the host vehicle so as to be parked into the available parking space.

The first forward parking trajectory may include at least one of a first trajectory generated in the form of a forward-turning trajectory or a second trajectory generated as a combination of a forward trajectory and a forward-turning trajectory, by using boundary points of the available parking space and avoidance points set on an object recognized around the available parking space.

The second forward parking trajectory may include at least one of a third trajectory generated as a combination of a forward trajectory and a trajectory of forward movement subsequent to backward-turning movement when the rear axle of the host vehicle is capable of being positioned on the central axis of the available parking space through the backward-turning movement subsequent to the forward movement or a fourth trajectory generated as a combination of a forward trajectory and a trajectory of forward-turning movement subsequent to straight backward movement through steering control when the rear axle of the host vehicle is not capable of being positioned on the central axis of the available parking space through the backward-turning movement subsequent to the forward movement.

The fourth trajectory may be generated when an available road width of a road on which the host vehicle is positioned is equal to or less than a reference width.

The controller may generate a parking trajectory for parking the host vehicle into the available parking space when backward parking is determined as the parking execution method, and the controller may generate a first backward parking trajectory when a rear axle of the host vehicle is capable of being positioned on the central axis of the available parking space, and generate a second backward parking trajectory when the rear axle of the host vehicle is not capable of being positioned on the central axis of the available parking space, in controlling the host vehicle so as to be parked into the available parking space.

The first backward parking trajectory may include at least one of a fifth trajectory generated in the form of a backward-turning trajectory or a sixth trajectory generated as a combination of a backward trajectory and a backward-turning trajectory, by using boundary points of the available parking space and avoidance points set on an object recognized around the available parking space.

The second backward parking trajectory may include at least one of a seventh trajectory generated as a combination of a backward trajectory and a trajectory of backward movement subsequent to forward-turning movement when the rear axle of the host vehicle is capable of being positioned on the central axis of the available parking space through forward-turning movement subsequent to backward movement or an eighth trajectory generated as a combination of a backward trajectory and a trajectory of backward-turning movement subsequent to straight forward movement of the host vehicle through steering control when the rear axle of the host vehicle is not capable of being positioned on the central axis of the available parking space through the forward-turning movement subsequent to the backward movement.

The eighth trajectory may be generated when an available road width of a road on which the host vehicle is positioned is equal to or less than a reference width.

According to another aspect of the present disclosure, a vehicle parking assist method includes steps of: searching for an available parking space; determining a type of parking for the available parking space; determining a parking execution method in consideration of location relationship between the available parking space and a position of a host vehicle when an angle parking type is determined as the type of parking for the available parking space; and executing parking into the available parking space based on the determined parking execution method.

The determining of the parking type of the available parking space may include determining the parking type based on an angle between at least one parking space-separation line and a parking space-entry line, which are identified in the available parking space.

The determining of the parking execution method may include determining forward parking as the parking execution method when search of the available parking space is completed in a state in which the host vehicle is positioned before reaching a central axis of the available parking space in a traveling direction of the host vehicle, and determining backward parking as the parking execution method when the available parking space is found in a state in which the host vehicle is positioned after passing the central axis of the available parking space.

The executing of the parking into the available parking space includes generating a parking trajectory for parking the host vehicle into the available parking space when the forward parking is determined as the parking execution method, and the executing of the parking into the available parking space may include generating a first forward parking trajectory when a rear axle of the host vehicle is capable of being positioned on the central axis of the available parking space, and generating a second forward parking trajectory when the rear axle of the host vehicle is not capable of being positioned on the central axis of the available parking space, in controlling the host vehicle so as to be parked into the available parking space.

The executing of the parking into the available parking space may include generating a parking trajectory for parking the host vehicle into the available parking space when the backward parking is determined as the parking execution method, and the executing of the parking into the available parking space may include generating a first backward parking trajectory when a rear axle of the host vehicle is capable of being positioned on the central axis of the available parking space, and generating a second backward parking trajectory when the rear axle of the host vehicle is not capable of being positioned on the central axis of the available parking space, in controlling the host vehicle so as to be parked into the available parking space.

### BRIEF DESCRIPTION OF THE DRAWINGS

The above and other objects, features and advantages of the present disclosure will be more apparent from the following detailed description taken in conjunction with the accompanying drawings:
FIG. 1 is a block diagram illustrating a vehicle parking assist apparatus according to an embodiment of the present disclosure;
FIGS. 2 and 3 are diagrams for describing a parking space search process of a vehicle parking assist apparatus according to an embodiment of the present disclosure;
FIG. 4 is a diagram for describing a parking type determination process of a vehicle parking assist apparatus according to an embodiment of the present disclosure;
FIGS. 5 and 6 are diagrams for describing a first forward parking trajectory of a vehicle parking assist apparatus, according to an embodiment of the present disclosure;
FIGS. 7 and 8 are diagrams for describing a second forward parking trajectory of a vehicle parking assist apparatus, according to an embodiment of the present disclosure;
FIGS. 9 and 10 are diagrams for describing a first backward parking trajectory of a vehicle parking assist apparatus, according to an embodiment of the present disclosure;
FIGS. 11 and 12 are diagrams for describing a second backward parking trajectory of a vehicle parking assist apparatus, according to an embodiment of the present disclosure;
FIG. 13 is a flowchart of a vehicle parking assist method according to an embodiment of the present disclosure; and
FIG. 14 is a block diagram of a computing system for executing a vehicle parking assist method according to an embodiment of the present disclosure.

### DETAILED DESCRIPTION

Hereinafter, exemplary embodiments of the present disclosure will be described in detail with reference to the accompanying drawings. It should be noted that in giving reference numerals to elements of each drawing, like reference numerals refer to like elements even though like elements are shown in different drawings. In addition, a detailed description of well-known features or functions will be ruled out in order not to unnecessarily obscure the gist of the present disclosure.

In addition, terms, such as first, second, A, B, (a), (b) or the like may be used herein when describing components of the present disclosure. Each of these terminologies is not used to define an essence, order or sequence of a corresponding component but used merely to distinguish the corresponding component from other component(s). Although not differently defined, entire terms including a technical term and a scientific term used here have the same meaning as a meaning that may be generally understood by a person of common skill in the art. It is additionally analyzed that terms defined in a generally used dictionary have a meaning corresponding to a related technology document and presently disclosed contents and are not analyzed as an ideal or very official meaning unless stated otherwise.

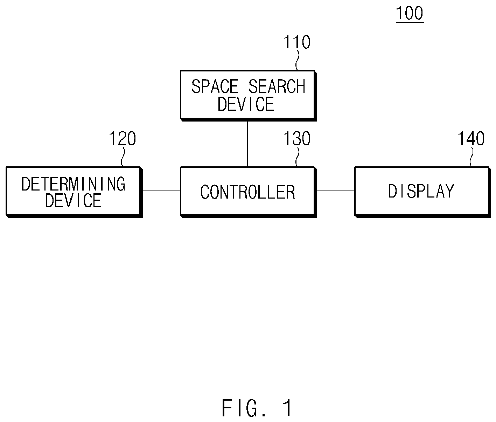

FIG. 1 is a block diagram illustrating a vehicle parking assist apparatus according to an embodiment of the present disclosure.

Referring to FIG. 1, a vehicle parking assist apparatus 100 according to an embodiment of the present disclosure may include a space search device 110, a determining device 120, a controller 130, and a display 140.

The space search device 110 may search for an available parking space. For example, the available parking space may mean an empty parking space in which a vehicle can be parked among a plurality of parking spaces in a parking lot. The space search device 110 may be activated automatically when a host vehicle enters a parking lot and may search for an available parking space or perform an operation of searching for an available parking space in response to a user's operation, and is not limited thereto.

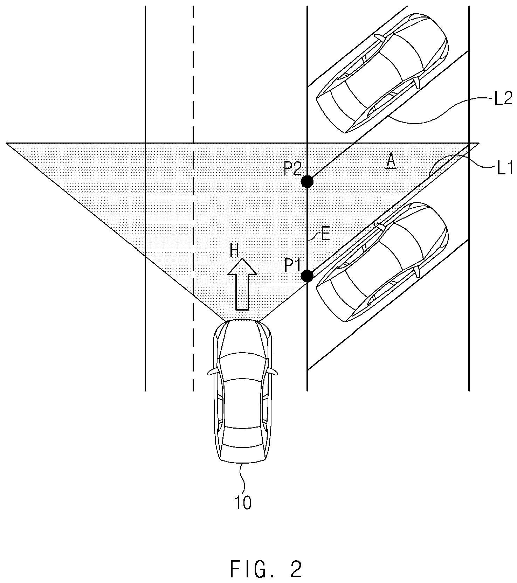

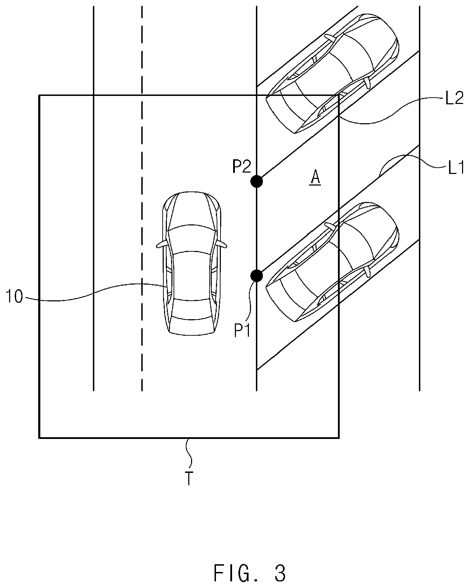

The space search device 110 may include at least one of an ultrasonic sensor, a front camera, or a side-mirror camera. The space search device 110 may search for an available parking space by using sensing information obtained from the ultrasonic sensor, photography information obtained from the front camera and the side-mirror camera, and the like. For example, the space search device 110 may determine whether search of the available parking space is completed based on whether two consecutive parking space-separation lines are recognized without disconnection based on an image obtained from the front camera, and based on a presence or absence of an object between the two parking space-separation lines. The space search device 110 may determine whether search of the available parking space is completed based on whether two consecutive parking space-separation lines are recognized without disconnection in a top view image generated based on images obtained from the front camera and the side-mirror camera, and based on a presence or absence of an object between the two parking space-separation lines. A specific operation of the space search device 110 will be described with reference to FIGS. 2 and 3 below.

The determining device 120 may determine a parking type of an available parking space. For example, the parking type may include a perpendicular parking type, a parallel parking type, an angle parking type, and the like. In addition, the determining device 120 may determine a parking type of an arbitrary parking space in a parking lot and apply a result of the determination as a parking type of an available parking space. The determining device 120 may determine a parking type of an available parking space by using the top view image obtained by the space search device 110.

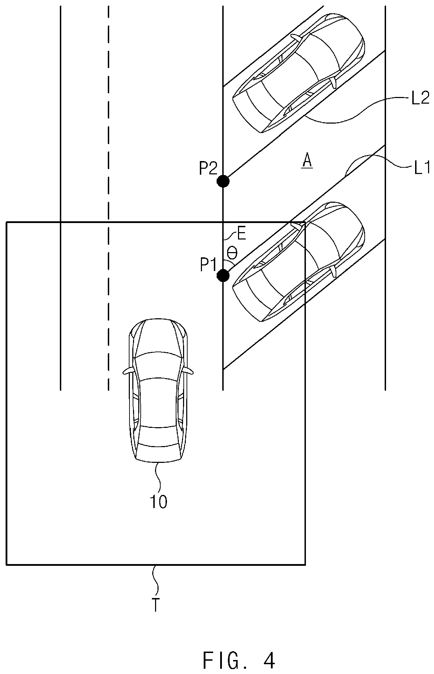

The determining device 120 may determine a parking type of an available parking space based an angle between at least one parking space-separation line and a parking space-entry line, which are identified in an available parking space. For example, the determining device 120 may determine an angle parking type as a parking type of the available parking space when an angle between at least one parking space-separation line and a parking space-entry line falls within a predetermined angle range. The specific operation of the determining device 120, the parking space-separation line, and the parking space-entry line will be described in detail with reference to FIG. 4 below. In addition, the determining device 120 may be a processor such as a central processing unit (CPU) for carrying out instructions of a computer program.

The controller 130 may control an overall operation of the vehicle. Here, the controller 130 may be an electronic control unit (ECU), or any other processor, but not limited thereto and may control the functions of the space search device 110, the determining device 120, and the display 140. Alternatively, the controller 130 may include the space search device 110, the determining device 120, and the display 140 embedded therein. The controller 130 may control an automatic parking operation of the vehicle. The automatic parking operation may include at least one of an operation of practically searching for, by a vehicle, an available parking space without involvement of a user, an operation of determining a parking execution method according to a parking type of a found available parking space, or an operation of completing parking into the available parking space according to the determined parking execution method. In this case, the parking execution method may include parking scenarios such as forward parking, backward parking, or the like and parking trajectories respectively generated corresponding to the parking scenarios.

The controller 130 may control vehicle parking based on a parking type of an available parking space. The controller 130 may control vehicle parking by determining parking execution methods respectively suitable for a case in which the available parking space is a perpendicular parking type, a case in which the available parking space is a parallel parking type, and a case in which the available parking space is an angle parking type. For example, the controller 130 may determine a parking execution method in consideration of a position relationship between an available parking space and a host vehicle when a parking type of the available parking space is the angle parking type.

The controller 130 may determine forward parking as the parking execution method when search of the available parking space is completed in a state in which the host vehicle is positioned before reaching a central axis of the available parking space in a traveling direction of the host vehicle. For example, when forward parking is determined as the parking execution method, the controller 130 generates a parking trajectory for parking the host vehicle into an available parking space. In the case of controlling the host vehicle so as to be parked into the available parking space, the controller 130 generates a first forward parking trajectory when a center of a rear axle of the host vehicle is capable of being positioned on a central axis of the available parking space, and generates a second forward parking trajectory when the center of the rear axle of the host vehicle is not capable of being positioned on the central axis of the available parking space.

In this case, the first forward parking trajectory may include at least one of a first trajectory generated in the form of a forward-turning trajectory, or a second trajectory generated as a combination of a forward trajectory and a forward-turning trajectory, by using boundary points of the available parking space and an avoidance point set on an object recognized around the available parking space. For example, the object recognized around the available parking space may include another vehicle parked in a parking space adjacent to the available parking space or an obstacle. The forward trajectory included in the second trajectory may be defined as a trajectory along which a vehicle moves forward to avoid the another vehicle parked in the parking space adjacent to the available parking space or the obstacle.

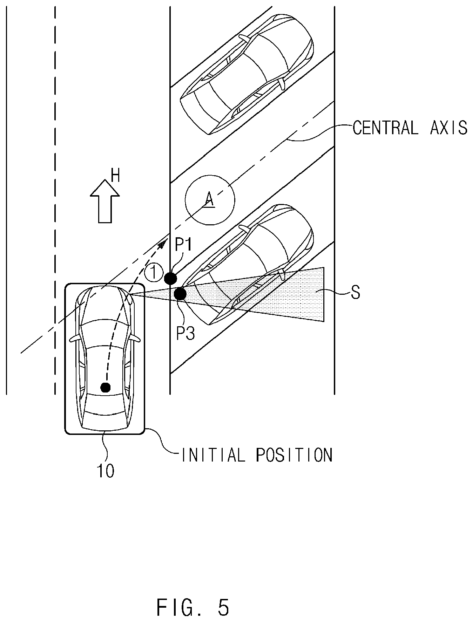

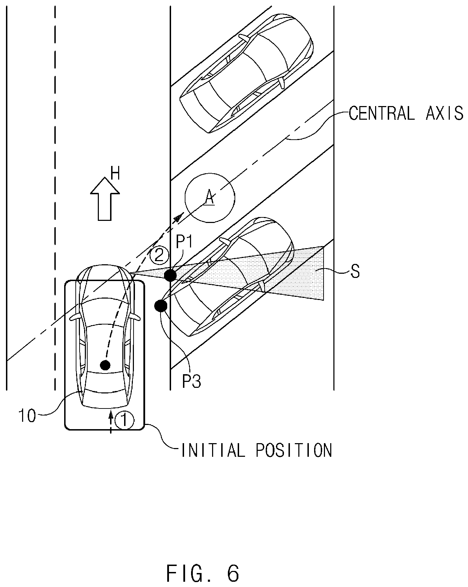

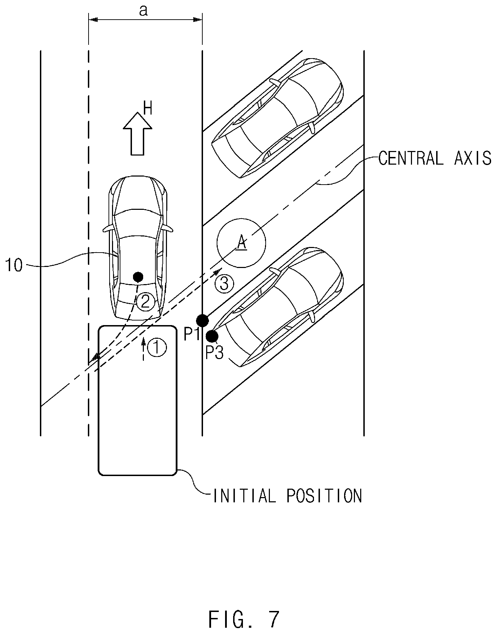

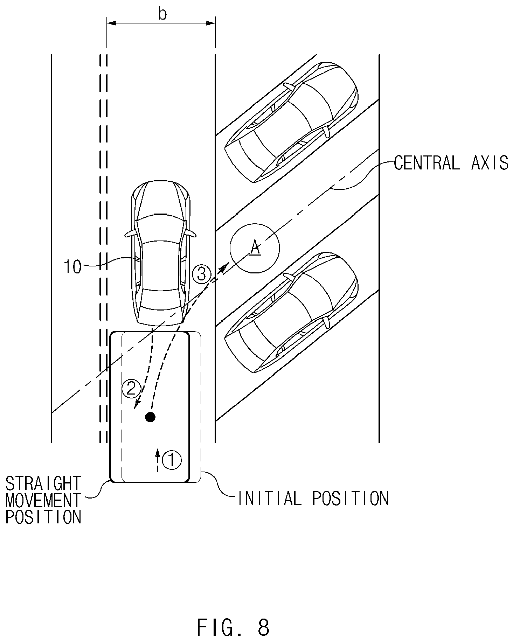

The second forward parking trajectory may include at least one of a third trajectory generated as a combination of a forward trajectory and a trajectory of forward movement subsequent to backward-turning movement when a center of the rear axle of the host vehicle is capable of being positioned on the central axis of the available parking space through backward-turning movement subsequent to forward movement or a fourth trajectory generated as a combination of a forward trajectory and a trajectory of forward-turning movement subsequent to straight backward movement through steering control when the center of the rear axle of the host vehicle is not capable of being positioned on the central axis of the available parking space through backward-turning movement subsequent to forward movement. For example, the fourth trajectory may be generated when an available road width of a road on which the host vehicle is positioned is equal to or less than a reference width. The first forward parking trajectory will be described in detail with reference to FIGS. 5 and 6 below and the second forward parking trajectory will be described in detail with reference to FIGS. 7 and 8 below.

The controller 130 may determine backward parking as a parking execution method when search of the available parking space is completed in a state in which the host vehicle is positioned after passing a central axis of the available parking space in a traveling direction of the host vehicle. When backward parking is determined as the parking execution method, the controller 130 may generate a parking trajectory for parking the host vehicle into an available parking space. In the case of controlling the host vehicle so as to be parked into the available parking space, the controller 130 may generate a first backward parking trajectory when a center of a rear axle of the host vehicle is capable of being positioned on a central axis of the available parking space, and generate a second backward parking trajectory when the center of the rear axle of the host vehicle is not capable of being positioned on the central axis of the available parking space.

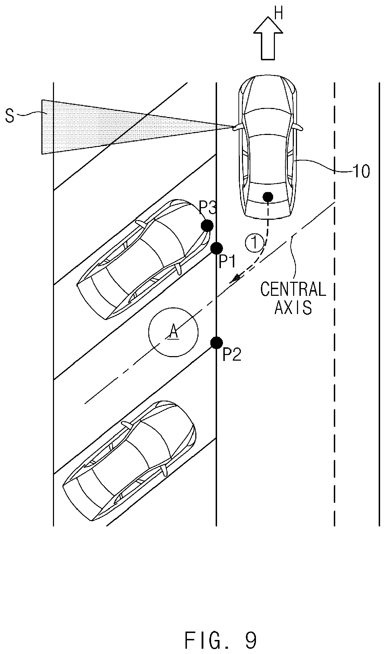

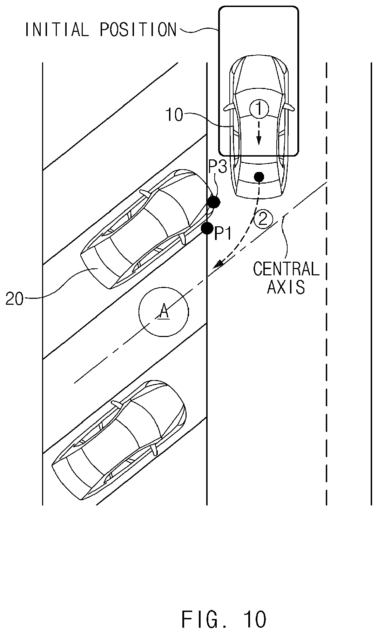

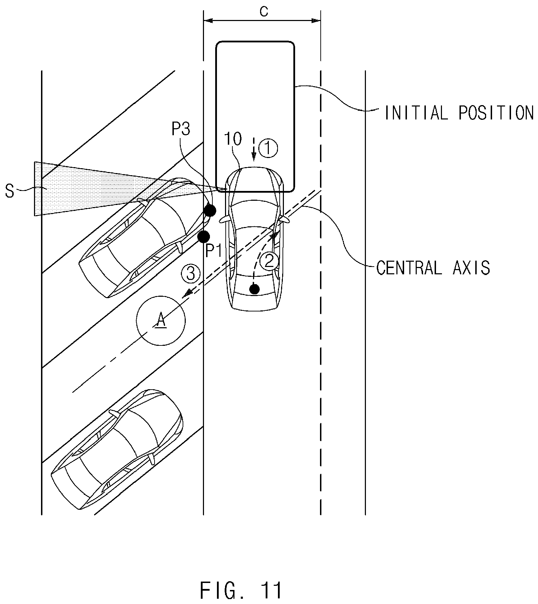

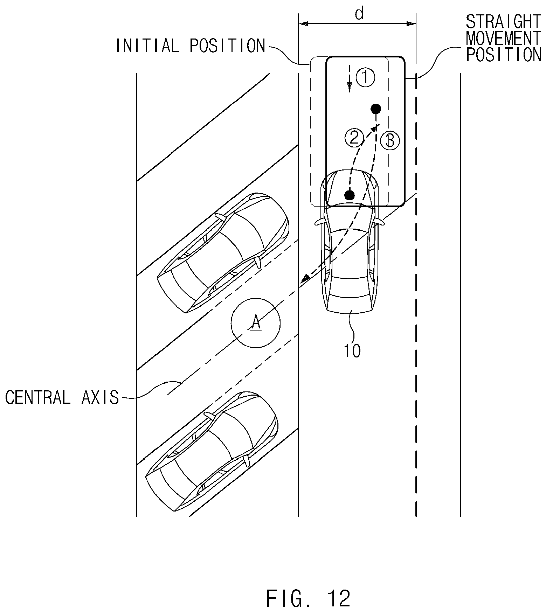

In this case, the first backward parking trajectory may include at least one of a fifth trajectory generated in the form of a backward-turning trajectory or a sixth trajectory generated as a combination of a backward trajectory and a backward-turning trajectory, by using boundary points of the available parking space and avoidance points set on an object recognized around the available parking space. The second backward parking trajectory may include at least one of a seventh trajectory generated as a combination of a backward trajectory and a trajectory of backward movement subsequent to forward-turning movement when a center of the rear axle of the host vehicle is capable of being positioned on the central axis of the available parking space through forward-turning movement subsequent to backward movement or an eighth trajectory generated as a combination of a backward trajectory and a trajectory of backward-turning movement subsequent to straight forward movement of the host vehicle through steering control when the center of the rear axle of the host vehicle is not capable of being positioned on the central axis of the available parking space through forward-turning movement subsequent to backward movement. For example, the eighth trajectory may be generated when an available road width of a road on which the host vehicle is positioned is equal to or less than a reference width. The first backward parking trajectory will be described in detail with reference to FIGS. 9 and 10 below and the second backward parking trajectory will be described in detail with reference to FIGS. 11 and 12 below.

The display 140 may display an available parking space search completion message. For example, the display 140 may include a head up display (HUD), an audio video navigation (AVN) display, and the like. By displaying the available parking space search completion message in the display 140, it is possible to allow a user to check the available parking space search completion message and induce the user to input an operation button for starting an automatic parking operation of the vehicle through an input device (not shown) or to control stopping of the vehicle through a braking device.

As described above, the vehicle parking assist apparatus 100 according to the embodiment of the present disclosure may determine a parking execution method in consideration of a position relationship between an available parking space and the host vehicle when a parking type of the available parking space is an angle parking type, and aid in parking of the host vehicle according to the determined parking execution method. Therefore, it is possible to improve user convenience at the time of parking.

FIGS. 2 and 3 are diagrams for describing an available parking space search process of a vehicle parking assist apparatus according to an embodiment of the present disclosure.

First, referring to FIG. 2, there is illustrated a situation in which a host vehicle 10 including the vehicle parking assist apparatus 100 searches for an available parking space. The available parking space "A" may include parking space-separation lines L1 and L2, a parking space-entry line E, and boundary points P1 and P2.

The space search device 110 of the vehicle parking assist apparatus 100 may determine whether search of the available parking space is completed based on whether the two consecutive parking space-separation lines L1 and L2 are recognized without disconnection based on an image obtained from a front camera, and based on a presence or absence of an object between the two parking space-separation lines L1 and L2. That is, when the parking space-separation line L1 is recognized from the boundary point P1 to the end thereof without disconnection and the parking space-separation line L2 is recognized from the boundary point P2 to the end thereof without disconnection based on an image obtained from a front camera, and no object is present in an area between the two parking space-separation lines L1 and L2. The space search device 110 may determine that search of the available parking space is completed. In addition, the space search device 110 may determine whether an object is present in the area between the two parking space-separation lines L1 and L2 through a method of detecting a single pavement between the two parking space-separation lines L1 and L2 using deep-learning technology.

That is, in the case of searching for an available parking space using the image obtained from the front camera, the space search device 110 may complete search of the available parking space before the host vehicle 10 reaches the available parking space.

Referring to FIG. 3, the space search device 110 may determine whether search of the available parking space is completed based on whether the two consecutive parking space-separation lines L1 and L2 are recognized without disconnection in a top view image "T" generated based on images obtained from the front camera and the side-mirror camera and based on a presence or absence of an object between the two parking space-separation lines L1 and L2. The space search device 110 may determine whether an object is present in the area between the two parking space-separation lines L1 and L2 through a method of detecting a single pavement between the two parking space-separation lines L1 and L2 using deep-learning technology.

FIG. 4 is a diagram for describing a parking type determination process of a vehicle parking assist apparatus according to an embodiment of the present disclosure.

Referring to FIG. 4, the determining device 120 may identify an available parking space "A" through a top view image obtained from the space search device 110. The determining device 120 may determine a parking type of the available parking space based on an angle between at least one parking space-separation line L1 or L2 and a parking space-entry line E, which are identified in the available parking space "A". For example, the determining device 120 may determine an angle parking type as a parking type of the available parking space "A" when the angle θ between the parking space-separation line L1 and the parking space-entry line E falls within a predetermined angle range.

On the other hand, there may be a case in which no parking space-entry line E is present in a parking space. In this case, the determining device 120 may generate a virtual parking space-entry line E connecting the boundary points P1 and P2 and determine a parking type of the available parking space based on an angle between the generated virtual parking space-entry line and the parking space-separation line L1.

FIGS. 5 and 6 are diagrams for describing a first forward parking trajectory of a vehicle parking assist apparatus, according to an embodiment of the present disclosure.

Referring to FIGS. 5 and 6, there is illustrated a situation in which the host vehicle 10 including the vehicle parking assist apparatus 100 determines a parking execution method and executes parking from a stopped position into an available parking space based on the determined parking execution method.

The controller 130 of vehicle parking assist apparatus 100 may determine forward parking as a parking execution method when search of an available parking space "A" is completed in a state in which the host vehicle 10 is positioned before reaching a central axis of the available parking space "A" in a traveling direction H of the host vehicle. In this case, the state in which the host vehicle 10 is positioned before reaching the central axis of the available parking space "A" may include a case in which a front bumper of the host vehicle 10 is positioned before the central axis of the available parking space "A" and a case in which a front axle (that is, a front wheel axle) of the host vehicle 10 is positioned before reaching the central axis of the available parking space "A". In addition, the central axis of the available parking space "A" may be defined as a central axis in a longitudinal direction of the available parking space "A". The controller 130 may generate a parking trajectory for parking the host vehicle into the available parking space "A" when forward parking is determined as the parking execution method.

In the case of controlling the host vehicle 10 so as to move forward and turn (for example, move forward and simultaneously turn right) and then enter the available parking space "A", when determining that a center of a rear axle (that is, a rear wheel axle) of the host vehicle 10 is capable of being positioned on the central axis of the available parking space "A", the controller 130 may generate a first forward parking trajectory. The first forward parking trajectory may include a first trajectory (see FIG. 5) and a second trajectory (see FIG. 6).

Referring to FIG. 5, the controller 130 may generate a first trajectory ① in the form of a forward-turning trajectory using a boundary point P1 of an available parking space "A" and an avoidance point P3 set on an object recognized around the available parking space. The avoidance point P3 may be a corner point of an object positioned in a sensing area S of an ultrasonic sensor of the space search device 110. The controller 130 may generate the first trajectory using a middle position obtained based on the boundary point P1 and the avoidance point P3 set on the object recognized around the available parking space. The first trajectory may include a trajectory with the shape of a clothoid curve. The controller 130 may execute forward parking of the host vehicle 10 into the available parking space "A" based on the generated first trajectory.

Referring to FIG. 6, the controller 130 may generate a second trajectory as a combination of a forward trajectory and a forward-turning trajectory. The controller 130 may generate the second trajectory when it is hard to generate the first trajectory due to another vehicle 20 parked around the available parking space "A". Specifically, the controller 130 may park the host vehicle 10 into the available parking space "A" according to the forward trajectory ①, along which the host vehicle moves from an initial position of the host vehicle 10 a predetermined distance in a traveling direction H of the host vehicle 10, and the forward-turning trajectory ②. When the host vehicle 10 moves forward and turns in a right direction along the forward-turning trajectory, the controller 130 may move the host vehicle 10 forward as much as a distance for avoiding contact with the another vehicle 20. The forward-turning trajectory may include a circular trajectory having a fixed turning radius.

According to the vehicle parking assist apparatus 100 described above, it is possible to execute one-step parking into an available parking space with an angle parking type through the first forward parking trajectory, thereby achieving fast parking with improved user convenience.

FIGS. 7 and 8 are diagrams for describing a second forward parking trajectory of a vehicle parking assist apparatus, according to an embodiment of the present disclosure.

Referring to FIGS. 7 and 8, the controller 130 of vehicle parking assist apparatus 100 may determine forward parking as a parking execution method when search of an available parking space "A" is completed in a state in which the host vehicle 10 is positioned before reaching a central axis of the available parking space "A" in a traveling direction H of the host vehicle 10. The controller 130 may generate a parking trajectory for parking the host vehicle into the available parking space "A" when forward parking is determined as the parking execution method. Unlike FIGS. 5 and 6, a situation in which it is hard to perform one-step parking due to limitations in an available road width a of a road on which the host vehicle 10 is positioned is assumed in FIGS. 7 and 8. In the case of controlling the host vehicle 10 so as to move forward and turn (for example, move forward and simultaneously turn right) and then enter the available parking space "A", when determining that a center of a rear axle (that is, a rear wheel axle) of the host vehicle 10 is not capable of being positioned on the central axis of the available parking space "A", the controller 130 may generate a second forward parking trajectory.

Referring to FIG. 7, when the center of the rear axle of the host vehicle is capable of being positioned on a central axis of the available parking space through backward-turning movement subsequent to forward movement, the controller 130 may generate a third trajectory generated as a combination of a forward trajectory and a trajectory of forward movement subsequent to backward-turning movement. For example, when an available road width is secured which is wide enough so that the center of the rear axle of the host vehicle 10 is capable of being positioned on the central axis of the available parking space "A" through backward-turning movement subsequent to forward movement (for example, moving backward while controlling a steering in the left direction), the controller 130 may generate a third trajectory. Specifically, the controller 130 may generate the third trajectory configured as a combination of a forward trajectory ① along which the host vehicle 10 moves forward, a backward-turning trajectory ② and a forward trajectory ③, and park the host vehicle 10 into the available parking space "A" based on the generated third trajectory.

Referring to FIG. 8, when the center of the rear axle of the host vehicle is not capable of being positioned on the central axis of the available parking space through backward-turning movement subsequent to forward movement, the controller 130 may generate a fourth trajectory configured as a combination of a forward trajectory and a trajectory of forward-turning movement subsequent to straight backward movement of the host vehicle 10 through steering control. For example, when an available road width "b" is not secured which is wide enough so that the center of the rear axle of the host vehicle 10 is capable of being positioned on the central axis of the available parking space "A" through backward-turning movement subsequent to forward movement (for example, moving backward while controlling a steering in the left direction), the controller 130 may generate the fourth trajectory.

The controller 130 may generate the fourth trajectory configured as a combination of a forward trajectory ① along which the host vehicle 10 moves forward, a backward-turning trajectory ② and a forward trajectory ③, and park the host vehicle 10 into the available parking space "A" based on the generated fourth trajectory. That is, the controller 130 may secure a free space which allows the host vehicle 10 to enter the available parking space "A" using the trajectory of a clothoid curve or a circular trajectory having a fixed turning radius by controlling the host vehicle 10 so as to move forward from an initial position along the forward trajectory ① and move backward straightly through steering control (a backward-turning trajectory ②).

FIGS. 9 and 10 are diagrams for describing a first backward parking trajectory of a vehicle parking assist apparatus, according to an embodiment of the present disclosure.

Referring to FIGS. 9 and 10, there is illustrated a situation in which the host vehicle 10 including the vehicle parking assist apparatus 100 determines a parking execution method and executes parking from a stopped position into an available parking space based on the determined parking execution method.

The controller 130 of vehicle parking assist apparatus 100 may determine backward parking as a parking execution method when search of an available parking space "A" is completed in a state in which the host vehicle 10 is positioned after passing a central axis of the available parking space "A" in a traveling direction H of the host vehicle 10. In this case, the state in which the host vehicle 10 is positioned after the central axis of the available parking space "A" may include a case in which a back bumper of the host vehicle 10 is positioned after passing the central axis of the available parking space "A" and a case in which a front-rear axle (that is, a front wheel axle) of the host vehicle 10 is positioned after passing the central axis of the available parking space "A". The controller 130 may generate a parking trajectory for parking the host vehicle 10 into the available parking space "A" when backward parking is determined as the parking execution method.

In the case of controlling the host vehicle 10 so as to move backward and turn (for example, move backward and simultaneously turn left) and then enter the available parking space "A", when determining that a center of a rear axle (that is, a rear wheel axle) of the host vehicle 10 is capable of being positioned on the central axis of the available parking space "A", the controller 130 may generate a first backward parking trajectory. The first backward parking trajectory may include a fifth trajectory (see FIG. 9) and a sixth trajectory (see FIG. 10).

Referring to FIG. 9, the controller 130 may generate a fifth trajectory ① configured in the form of a backward-turning trajectory using a boundary point P1 of an available parking space "A" and an avoidance point P3 set on an object recognized around the available parking space. For example, the avoidance point P3 may be a corner point of an object positioned in a sensing area S of an ultrasonic sensor of the space search device 110. For example, the controller 130 may generate the fifth trajectory in the form of the backward-turning trajectory, using a middle position obtained based on the boundary point P1 and the avoidance point P3 set on the object recognized around the available parking space. The backward-turning trajectory may include the trajectory of a clothoid curve. The controller 130 may execute backward parking so as to allow the host vehicle 10 to be parked into the available parking space "A" based on the generated fifth trajectory.

Referring to FIG. 10, the controller 130 may generate a sixth trajectory as a combination of a backward trajectory and a backward-turning trajectory. For example, the controller 130 may generate the sixth trajectory when it is hard to generate the fifth trajectory due to another vehicle 20 parked around the available parking space "A". Specifically, the controller 130 may park the host vehicle 10 into the available parking space "A" according to the backward trajectory ① along which the host vehicle 10 moves backward from an initial position of the host vehicle 10 a predetermined distance and the backward-turning trajectory ②. When the host vehicle 10 moves backward and simultaneously turns in the left direction along the backward-turning trajectory ②, the controller 130 may control the host vehicle 10 so as to move backward along the backward trajectory ① a distance for avoiding contact with the another vehicle 20.

According to the vehicle parking assist apparatus 100 described above, it is possible to execute one-step parking into an available parking space with an angle parking type through the first backward parking trajectory, thereby achieving fast parking with improved user convenience.

FIGS. 11 and 12 are diagrams for describing a second backward parking trajectory of a vehicle parking assist apparatus, according to an embodiment of the present disclosure.

Referring to FIGS. 11 and 12, the controller 130 of vehicle parking assist apparatus 100 may determine backward parking as a parking execution method when search of an available parking space "A" is completed in a state in which the host vehicle 10 is positioned after passing a central axis of the available parking space "A" in a traveling direction H of the host vehicle 10. When backward parking is determined as the parking execution method, the controller 130 may generate a parking trajectory for parking the host vehicle 10 into the available parking space "A".

In the case of controlling the host vehicle 10 so as to move backward and turn (for example, move backward and simultaneously turn left) and then enter the available parking space "A", when determining that a center of a rear axle (that is, a rear wheel axle) of the host vehicle 10 is not capable of being positioned on the central axis of the available parking space "A", the controller 130 may generate a second backward parking trajectory. The second backward parking trajectory may include a seventh trajectory (see FIG. 11) and an eighth trajectory (see FIG. 12).

Referring to FIG. 11, when the center of the rear axle of the host vehicle 10 is capable of being positioned on the central axis of the available parking space "A" through forward-turning movement subsequent to backward movement, the controller 130 may generate a seventh trajectory configured as a combination of a backward trajectory and a trajectory of backward movement subsequent to forward-turning movement. For example, when an available road width "c" is secured which is wide enough so that the center of the rear axle of the host vehicle 10 is capable of being positioned on the central axis of the available parking space "A" through forward-turning movement subsequent to backward movement (for example, moving forward while controlling a steering in the right direction), the controller 130 may generate a seventh trajectory. Specifically, the controller 130 may generate the seventh trajectory configured as a combination of a backward trajectory ① along which the host vehicle 10 moves backward, a forward-turning trajectory ② and a backward trajectory ③, and park the host vehicle 10 into the available parking space "A" based on the generated seventh trajectory.

Referring to FIG. 12, when the center of the rear axle of the host vehicle 10 is not capable of being positioned on the central axis of the available parking space "A" through forward-turning movement subsequent to backward movement, the controller 130 may generate an eighth trajectory configured as a combination of a backward trajectory and a trajectory of backward-turning movement subsequent to straight forward movement through steering control. When an available road width "d" is not secured which is wide enough so that the center of the rear axle of the host vehicle 10 is capable of being positioned on the central axis of the available parking space "A" through forward-turning movement subsequent to backward movement (for example, moving forward while controlling a steering in the right direction), the controller 130 may generate the eighth trajectory.

The controller 130 may generate the eighth trajectory configured as a combination of a backward trajectory ① along which the host vehicle 10 moves backward, a forward-turning trajectory ② and a backward trajectory ③, and park the host vehicle 10 into the available parking space "A" based on the generated eighth trajectory. That is, the controller 130 may secure a free space which allows the host vehicle 10 to enter the available parking space "A" using the trajectory of a clothoid curve or a circular trajectory having a fixed turning radius by controlling the host vehicle 10 so as to move backward from an initial position along the backward trajectory ① and move forward straightly through steering control (forward-turning trajectory ②).

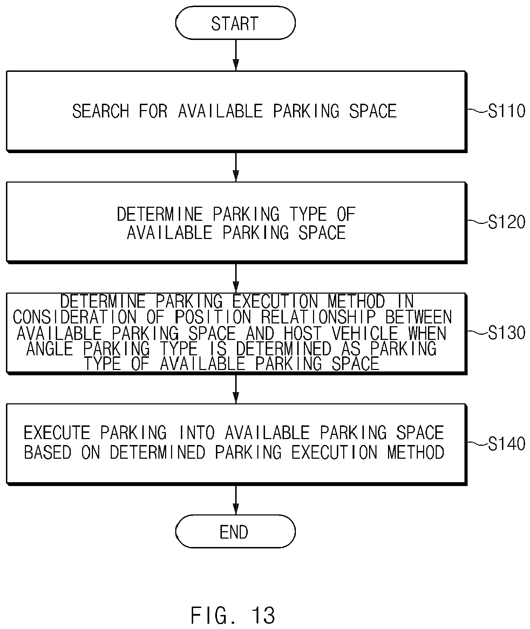

FIG. 13 is a flowchart of a vehicle parking assist method according to an embodiment of the present disclosure.

Referring to FIG. 13, a vehicle parking assist method according to an embodiment of the present disclosure may include step S110 of searching for an available parking space, step S120 of determining a parking type for the available parking space, step S130 of determining a parking execution method in consideration of a position relationship between the available parking space and a host vehicle when an angle parking type is determined as the parking type for the available parking space, and step S140 of executing parking into the available parking space based on the determined parking execution method.

Hereinafter, steps S110 to S140 will be described in detail with reference to FIG. 1.

In step S110, the space search device 110 may search for an available parking space. For example, the available parking space may mean an empty parking space in which a vehicle can be parked among a plurality of parking spaces in a parking lot. The space search device 110 may determine whether search of the available parking space is completed based on whether two consecutive parking space-separation lines are recognized without disconnection based on an image obtained from the front camera, and based on the presence or absence of an object between the two parking space-separation lines. In addition, the space search device 110 may determine whether search of the available parking space is completed based on whether the two consecutive parking space-separation lines are recognized without disconnection in a top view image generated based on images obtained from the front camera and the side-mirror camera, and based on the presence or absence of an object between the two parking space-separation lines.

In step S120, the determining device 120 may determine a parking type of the available parking space. The determining device 120 may determine the parking type of the available parking space based on an angle between at least one parking space-separation line and a parking space-entry line, which are identified in an available parking space. For example, the determining device 120 may determine an angle parking type as a parking type of the available parking space when an angle between at least one parking space-separation line and a parking space-entry line falls within a predetermined angle range.

In step S130, the controller 130 may control vehicle parking based on the parking type of the available parking space. The controller 130 may control vehicle parking by determining parking execution methods respectively suitable for a case in which the available parking space is a perpendicular parking type, a case in which the available parking space is a parallel parking type, and a case in which the available parking space is an angle parking type. For example, the controller 130 may determine a parking execution method in consideration of a position relationship between the available parking space and the host vehicle when a parking type of the available parking space is the angle parking type.

The controller 130 may determine forward parking as a parking execution method when search of the available parking space is completed in a state in which a host vehicle is positioned before reaching a central axis of the available parking space in a traveling direction of the host vehicle. For example, when forward parking is determined as the parking execution method, the controller 130 generates a parking trajectory for parking the host vehicle into an available parking space. In the case of controlling the host vehicle so as to enter the available parking space, the controller 130 may generate a first forward parking trajectory when a center of a rear axle of the host vehicle is capable of being positioned on a central axis of the available parking space, and generate a second forward parking trajectory when the center of the rear axle of the host vehicle is not capable of being positioned on the central axis of the available parking space.

The controller 130 may determine backward parking as a parking execution method when search of the available parking space is completed in a state in which the host vehicle is positioned after a central axis of the available parking space in a traveling direction of the host vehicle. When backward parking is determined as the parking execution method, the controller 130 may generate a parking trajectory for parking the host vehicle into an available parking space. In the case of controlling the host vehicle so as to enter the available parking space, the controller 130 may generate a first backward parking trajectory when a center of a rear axle of the host vehicle is capable of being positioned on a central axis of the available parking space, and generate a second backward parking trajectory when the center of the rear axle of the host vehicle is not capable of being positioned on the central axis of the available parking space.

In step S140, the controller 130 may execute parking into an available parking space based on the determined parking execution method. For example, the controller 130 may execute parking into the available parking space based on at least one of a first forward parking trajectory, a second forward parking trajectory, a first backward parking trajectory or a second backward parking trajectory, which may be generated according to the determined parking execution method.

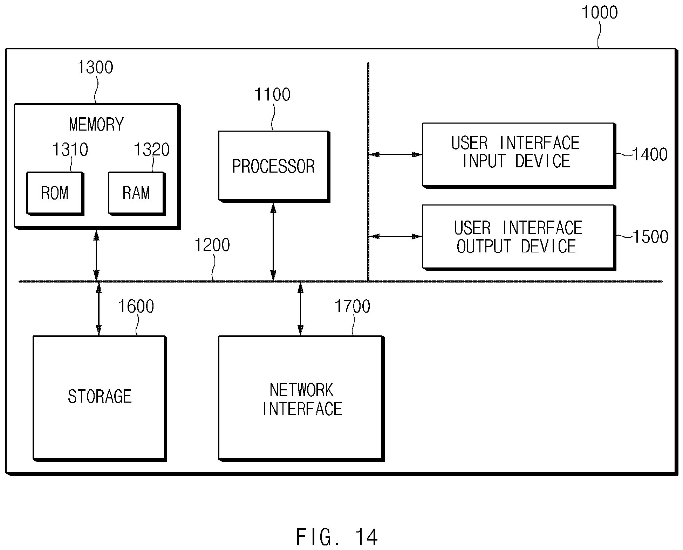

FIG. 14 is a block diagram illustrating a computing system for executing a vehicle parking assist method according to an embodiment of the present disclosure.

Referring to FIG. 14, the above-described vehicle parking assist method according to the embodiment of the present disclosure may be implemented even through a computing system. Referring to FIG. 14, a computing system 1000 may include at least one processor 1100, a memory 1300, a user interface input device 1400, a user interface output device 1500, storage 1600, and a network interface 1700, which are connected via a bus 1200.

The processor 1100 may be a central processing unit (CPU) or a semiconductor device that performs processing on instructions stored in the memory 1300 and/or the storage 1600. The memory 1300 and the storage 1600 may include various types of volatile and nonvolatile storage media. For example, the memory 1300 may include a Read Only Memory (ROM) and a Random Access Memory (RAM).

Thus, the steps of the method or the algorithm described in association with the embodiments disclosed herein may be directly implemented in hardware or a software module executed by the processor 1100, or in a combination thereof. The software module may reside in a storage medium (i.e., in the memory 1300 and/or the storage 1600) such as a RAM memory, a flash memory, a ROM memory, an EPROM memory, an EEPROM memory, a register, a hard disk, a removable disk, and CD-ROM. The exemplary storage medium may be coupled to the processor 1100, and the processor 1100 may read information from the storage medium and write information to the storage medium. Alternatively, the storage medium may be integrated in the processor 1100. The processor and the storage medium may reside in an application specific integrated circuit (ASIC). The ASIC may reside in a user terminal. Alternatively, the processor and the storage medium may reside in the user terminal as an individual component.

The vehicle parking assist apparatus and method according to the embodiments of the present disclosure may aid in parking into a diagonal parking space.

The vehicle parking assist apparatus and method according to the embodiments of the present disclosure may improve user convenience at the time of parking execution.

The foregoing description is merely illustrative of a technical idea of the present disclosure, and various changes and modifications may be made by those skilled in the art without departing from the essential characteristics of the present disclosure.

Accordingly, the embodiments disclosed herein are merely illustrative and are not intended to limit the technical concept of the present disclosure, and the scope of the technical idea of the present disclosure is not limited to the embodiments. The scope of protection of the disclosure is to be interpreted by the following claims, all spirits within a scope equivalent will be construed as included in the scope of the present disclosure.

### [FIG. 1]

110: SPACE SEARCH DEVICE
120: DETERMINING DEVICE
130: CONTROLLER
140: DISPLAY

### [FIG. 13]

S110: SEARCH FOR AVAILABLE PARKING SPACE
S120: DETERMINE PARKING TYPE OF AVAILABLE PARKING SPACE
S130: DETERMINE PARKING EXECUTION METHOD IN CONSIDERATION OF POSITION RELATIONSHIP BETWEEN AVAILABLE PARKING SPACE AND HOST VEHICLE WHEN ANGLE PARKING TYPE IS DETERMINED AS PARKING TYPE OF AVAILABLE PARKING SPACE
S140: EXECUTE PARKING INTO AVAILABLE PARKING SPACE BASED ON DETERMINED PARKING EXECUTION METHOD

### [Fig. 14]

1100: PROCESSOR
1300: MEMORY
1400: USER INTERFACE INPUT DEVICE
1500: USER INTERFACE OUTPUT DEVICE
1600: STORAGE
1700: NETWORK INTERFACE

## Claims

1. A vehicle parking assist apparatus comprising:
a space search device configured to search for an available parking space;
a determining device configured to determine a type of parking for the available parking space; and
a controller configured to:
determine a parking execution method in consideration of a position relationship between the available parking space and a host vehicle when determined that the type of parking for the available parking space is an angle parking type; and
execute parking into the available parking space.

2. The vehicle parking assist apparatus of claim 1, wherein the space search device includes at least one of an ultrasonic sensor, a front camera, or a side-mirror camera.

3. The vehicle parking assist apparatus of claim 2, wherein the space search device is configured to determine whether search of the available parking space is completed based on whether two consecutive parking space-separation lines are recognized without disconnection based on an image obtained from the front camera, and based on a presence or absence of an object between the two consecutive parking space-separation lines.

4. The vehicle parking assist apparatus of claim 2, wherein the space search device is configured to determine whether search of the available parking space is completed based on whether two consecutive parking space-separation lines are recognized without disconnection in a top view image generated based on images obtained from the front camera and the side-mirror camera, and based on a presence or absence of an object between the two parking space-separation lines.

5. The vehicle parking assist apparatus of claim 1, wherein the determining device is configured to determine the type of parking based on an angle between at least one parking space-separation line and a parking space-entry line, which are identified in the available parking space.

6. The vehicle parking assist apparatus of claim 1, further comprising:
a display configured to display a search completion message for parking guide to a user when search of the available parking space is completed.

7. The vehicle parking assist apparatus of claim 1, wherein the controller is configured to:
determine forward parking as the parking execution method when search of the available parking space is completed in a state in which the host vehicle is positioned before reaching a central axis of the available parking space in a traveling direction of the host vehicle; and
determine backward parking as the parking execution method when the search of the available parking space is completed in a state in which the host vehicle is positioned after passing the central axis of the available parking space.

8. The vehicle parking assist apparatus of claim 7, wherein the controller is further configured to:
generate a parking trajectory for parking the host vehicle into the available parking space when the forward parking is determined as the parking execution method;
generate a first forward parking trajectory when a rear axle of the host vehicle is capable of being positioned on the central axis of the available parking space; and
generate a second forward parking trajectory when the rear axle of the host vehicle is not capable of being positioned on the central axis of the available parking space.

9. The vehicle parking assist apparatus of claim 8, wherein the first forward parking trajectory includes at least one of a first trajectory generated as a forward-turning trajectory or a second trajectory generated as a combination of a forward trajectory and a forward-turning trajectory, by using boundary points of the available parking space and avoidance points set on an object recognized around the available parking space.

10. The vehicle parking assist apparatus of claim 8, wherein the second forward parking trajectory includes at least one of a third trajectory generated as a combination of a forward trajectory and a trajectory of forward movement subsequent to backward-turning movement when the rear axle of the host vehicle is capable of being positioned on the central axis of the available parking space through the backward-turning movement subsequent to the forward movement, or a fourth trajectory generated as a combination of a forward trajectory and a trajectory of forward-turning movement subsequent to straight backward movement through steering control when the rear axle of the host vehicle is not capable of being positioned on the central axis of the available parking space through the backward-turning movement subsequent to the forward movement.

11. The vehicle parking assist apparatus of claim 10, wherein the fourth trajectory is generated when an available road width of a road on which the host vehicle is positioned is equal to or less than a reference width.

12. The vehicle parking assist apparatus of claim 7, wherein the controller is further configured to:
generate a parking trajectory for parking the host vehicle into the available parking space when backward parking is determined as the parking execution method;
generate a first backward parking trajectory when a rear axle of the host vehicle is capable of being positioned on the central axis of the available parking space; and
generate a second backward parking trajectory when the rear axle of the host vehicle is not capable of being positioned on the central axis of the available parking space.

13. The vehicle parking assist apparatus of claim 12, wherein the first backward parking trajectory includes at least one of a fifth trajectory generated as a backward-turning trajectory or a sixth trajectory generated as a combination of a backward trajectory and a backward-turning trajectory, by using boundary points of the available parking space and avoidance points set on an object recognized around the available parking space.

14. The vehicle parking assist apparatus of claim 12, wherein the second backward parking trajectory includes at least one of a seventh trajectory generated as a combination of a backward trajectory and a trajectory of backward movement subsequent to forward-turning movement when the rear axle of the host vehicle is capable of being positioned on the central axis of the available parking space through forward-turning movement subsequent to backward movement, or an eighth trajectory generated as a combination of a backward trajectory and a trajectory of backward-turning movement subsequent to straight forward movement of the host vehicle through steering control when the rear axle of the host vehicle is not capable of being positioned on the central axis of the available parking space through the forward-turning movement subsequent to the backward movement, and
wherein the eighth trajectory is generated when an available road width of a road on which the host vehicle is positioned is equal to or less than a reference width.

15. A vehicle parking assist method comprising steps of:
searching for an available parking space;
determining a type of parking for the available parking space;
determining a parking execution method in consideration of location relationship between the available parking space and a position of a host vehicle when an angle parking type is determined as the type of parking for the available parking space; and
executing parking into the available parking space based on the determined parking execution method.
